# EUROPÄISCHE PATENTSCHRIFT

(11) **EP 3 255 988 B1**
(45) Veröffentlichungstag und Bekanntmachung des Hinweises auf die Patenterteilung: **24.03.2021**
(21) Anmeldenummer: 16703772.0
(22) Anmeldetag: 09.02.2016
(51) Int. Cl.: A01N 43/16, A01N 49/00, A01N 25/00, A01P 11/00

(54) **VERWENDUNG EINES MITTELS ZUR BEKÄMPFUNG VON RESISTENTEN WANDERRATTEN**
USE OF A COMPOSITION FOR THE EXTINCTION OF RESISTANT NORWAY RATS
UTILISATION D'UNE COMPOSITION POUR L'EXTINCTION DES RATS BRUNS RÉSISTANTS

(30) Priorität: 10.02.2015 EP 15154527
(43) Veröffentlichungstag der Anmeldung: 20.12.2017
(73) Patentinhaber: Bayer CropScience Aktiengesellschaft, 40789 Monheim am Rhein (DE)
(72) Erfinder: ENDEPOLS, Stefan, 51399 Burscheid (DE)
(74) Vertreter: BIP Patents
(86) Internationale Anmeldenummer: PCT/EP2016/052666
(87) Internationale Veröffentlichungsnummer: WO 2016/128368

(56) Entgegenhaltungen:
- WO-A1-2010/043322
- DE-A1- 2 310 636
- LU-A1- 81 407
- NZ-A- 533 342
- ALAN P. BUCKLE ET AL: "Relationship between resistance factors and treatment efficacy when bromadiolone was used against anticoagulant-resistant Norway rats ( Rattus norvegicus Berk.) in Wales", INTERNATIONAL JOURNAL OF PEST MANAGEMENT, Bd. 53, Nr. 4, 9. November 2007 (2007-11-09), Seiten 291-297, XP055172489, ISSN: 0967-0874, DOI: 10.1080/09670870701469872 in der Anmeldung erwähnt
- "Anticoagulant resistance in the Norway rat and Guidelines for the management of resistant rat infestations in the UK", , 13. Juli 2010 (2010-07-13), Seiten 1-8, XP055172317, U.K. Gefunden im Internet: URL:http://www.bpca.org.uk/assets/RRAG_Res istance_Guideline.pdf [gefunden am 2015-02-26]
- Mette Drude Markussen ET AL: "Characterization of bromadiolone resistance in a danish strain of Norway rats, rattus norvegicus, by hepatic gene expression profiling of genes involved in vitamin k-dependent [gamma]-carboxylation", Journal of Biochemical and Molecular Toxicology, 1. November 2007 (2007-11-01), Seiten 373-381, XP055172368, Hoboken DOI: 10.1002/jbt.20201 Gefunden im Internet: URL:http://onlinelibrary.wiley.com/doi/10. 1002/jbt.20201/abstract
- Kristof Baert ET AL: "Distribution of anticoagulant resistance in the brown rat in Belgium", Belg. J. Zool., 1. Januar 2012 (2012-01-01), Seiten 39-48, XP055172371, Belgium Gefunden im Internet: URL:https://www.inbo.be/sites/default/file s/bestanden/publicaties/233691.pdf [gefunden am 2015-02-26]
- DATABASE WPI Week 198749 Thomson Scientific, London, GB; AN 1987-345511 XP002736615, -& JP S62 249905 A (RIKEN VITAMIN CO) 30. Oktober 1987 (1987-10-30)
- SAINI M S ET AL: "Control of Rattus rattus with cholecalciferol: laboratory acceptance of freshly prepared and ready-to-use bait formulations", INTERNATIONAL BIODETERIORATION AND BIODEGRADATION, ELSEVIER LTD, GB, Bd. 30, Nr. 1, 1. Januar 1992 (1992-01-01) , Seiten 87-96, XP023923071, ISSN: 0964-8305, DOI: 10.1016/0964-8305(92)90027-L [gefunden am 1992-01-01]
- STEFAN ENDEPOLS ET AL: "Resistance tests and field trials with bromadiolone for the control of Norway rats (Rattus norvegicus) on farms in Westphalia, Germany", PEST MANAGEMENT SCIENCE, Bd. 68, Nr. 3, 1. Juli 2011 (2011-07-01), Seiten 348-354, XP055172487, ISSN: 1526-498X, DOI: 10.1002/ps.2268 in der Anmeldung erwähnt
- "SOREXA CD MOUSE BAIT, COMPOSITION/INFORMATION ON THE COMPONENTS", SOREX SAFETY DATA SHEET, , Nr. VITD81004 1. Juli 2003 (2003-07-01), Seiten 1-4, XP002532810, Gefunden im Internet: URL:http://www.sorex.com/uploads/VITD81004 (Sorexa_CD_Mouse_Bait).pdf
- R. POSPISCHIL ET AL: "RACUMIN PLUS , A NEW PROMISING RODENTICIDE AGAINST RATS AND MICE", PROCEEDINGS OF THE SIXTEENTH VERTEBRATE PEST CONFERENCE, Bd. 48, 1. Februar 1994 (1994-02-01), Seiten 180-187, XP055147608,
- Alan P Buckle ET AL: "Brodifacoum is effective against Norway rats ( Rattus norvegicus ) in a tyrosine139cysteine focus of anticoagulant resistance in Westphalia, Germany", PEST MANAGEMENT SCIENCE, vol. 68, no. 12, 25 September 2012 (2012-09-25), pages 1579-1585, XP55479096, BOGNOR REGIS; GB ISSN: 1526-498X, DOI: 10.1002/ps.3352
- D. K. Kocher ET AL: "Synergistic effect of bromadiolone and cholecalciferol (vitamin D 3 ) against house rat, Rattus rattus", International Journal of Research in BioSciences, vol. 2, no. 1, 1 January 2013 (2013-01-01) , pages 73-82, XP55147603,
- H.-J. Pelz ET AL: "The Genetic Basis of Resistance to Anticoagulants in Rodents", GENETICS, vol. 170, no. 4, 23 May 2005 (2005-05-23), pages 1839-1847, XP055548886, US ISSN: 0016-6731, DOI: 10.1534/genetics.104.040360
- LASSEUR ET AL: "Comparison of the inhibition effect of different anticoagulants on vitamin K epoxide reductase activity from warfarin-susceptible and resistant rat", PESTICIDE BIOCHEMISTRY AND PHYSIOLOGY, ACADEMIC PRESS, US, vol. 88, no. 2, 25 March 2007 (2007-03-25) , pages 203-208, XP005938028, ISSN: 0048-3575, DOI: 10.1016/J.PESTBP.2006.11.005
- Alan P Buckle ET AL: "Anticoagulant Resistance in Rats and Mice in the UK - Current Status in 2018", , 6 December 2018 (2018-12-06), pages 1-36, XP55709450, U.K. Retrieved from the Internet: URL:https://www.researchgate.net/publicati on/329443254_Anticoagulant_Resistance_in_R ats_and_Mice_in_the_UK_-_Current_Status_in _2018/link/5c08dffb4585157ac1ab1bc0/downlo ad [retrieved on 2020-06-29]

## Beschreibung

Die vorliegende Erfindung betrifft die Verwendung eines Mittels enthaltend mindestens ein Hydroxcumarin ausgewählt aus Warfarin, Coumachlore, Coumatetralyl, Bromadiolone, Difenacoum und Flocoumafen und mindestens ein Vitamin D-Analog ausgewählt aus Ergocalciferol und Cholecalciferol zur Bekämpfung von Wanderratten, bei denen zumindest gegen ein Antikoagulant der zweiten Generation ausgewählt aus Bromadiolone und Difenacoum eine praktische Resistenz vorliegt und sich diese praktische Resistenz durch einen Resistenzfaktor von mindestens 7 gegenüber Bromadiolone bzw. von mindestens 2 gegenüber Difenacoum auszeichnet. Die Wanderratten besitzen eine Gensequenzänderung in der Vitamin-K-Epoxid-Reduktase Complex 1 Subunit 1 (VKORC1) und sind vom Stamm L120Q Berkshire, L120Q Hampshire, Y139C oder Y139F.

Des Weiteren betrifft die vorliegende Erfindung auch ein Verfahren zur Bekämpfung von resistenten Wanderratten durch Einsatz der erfindungsgemäß beschriebenen Mittel. Antikoagulantien, insbesondere Hydroxycumarine, werden seit den 1950er Jahren als rodentizide Wirkstoffe in Fraßködern und anderen Mitteln für die Bekämpfung von Nagetieren eingesetzt.

Diese Wirkstoffe, wie z.B. Warfarin, hemmen die Aktivität des Enzyms Vitamin-K-Epoxidreduktase, welches oxidiertes Vitamin K in dessen aktive Form, das Vitamin K-Hydrochinon, umwandelt. Ein Mangel an der aktiven Form des Vitamin K bewirkt die unzureichende Carboxylierung zahlreicher Proteine, u.a. des Faktors X der Blutgerinnung. Die Umwandlung von Prothrombin in Thrombin, ein Schritt in der Blutgerinnungskaskade, ist damit gestört, was zu einer Schwächung und ggf. zum Tod eines Tieres nach Aufnahme einer entsprechenden Dosis des Cumarins führen kann.

Seit den 1950iger Jahren werden Antikoagulantien zur Bekämpfung von Schadnagern wie Wanderratten (*Rattus norvegicus*)*,* Hausratten (*Rattus rattus*) und Hausmäusen (*Mus musculus*) eingesetzt. Gegenüber Akutgiften haben diese Wirkstoffe den Vorteil der verzögerten Wirkung, so dass keine Köderscheu entsteht. Mit Vitamin K1 steht zudem bei versehentlicher Vergiftung z.B. von Haustieren ein wirksames Antidot zur Verfügung.

Bereits wenige Jahre nach der Markteinführung des ersten antikoagulanten Rodentizids, Warfarin, wurde über Toleranz von Ratten gegenüber diesem Wirkstoff berichtet (z.B. Boyle 1960; Nature 188:517.; Lund 1964, Bull WHO 47: 611-618). Auf Grund zunehmender Resistenzmeldungen kam es in den 1970iger bis 1980iger Jahren zur Entwicklung antikoagulanter Wirkstoffe der zweiten Generation mit deutlich höherer akuter Toxizität. Doch auch gegenüber einigen dieser Wirkstoffe können sich erhöhte Toleranzen oder Resistenzen entwickeln und Kreuzresistenzen auftreten. Generell gilt dabei, dass Resistenz gegen einen bestimmten Wirkstoff, Resistenz auch gegen alle weniger potenten Wirkstoffe einschließt. Ist ein Stamm resistent gegen einen Wirkstoff der zweiten Generation, so ist er folglich auch resistent gegen alle Wirkstoffe der ersten Generation, und auch ggf. weniger potente Stoffe der zweiten Generation. Besonderer Nachteil der hochpotenten Wirkstoffe der zweiten Generation ist deren hohe Toxizität in Verbindung mit langen Rückstandszeiten im Organismus, besonders der Leber. Diese Mittel werden daher nur sehr restriktiv verwendet. Obwohl als persistent und biotoxisch bewertet und deshalb prinzipiell nicht zulassungsfähig, werden sie vorerst noch behördlich unter Auflagen zugelassen, weil Alternativen fehlen.

Wesentliche Ursache der Resistenz bei Ratten und Hausmäusen sind Sequenzänderung im Gen Vitamin-K-Epoxid-Reduktase Complex Subunit 1 (VKORC1). Punktmutationen (Single Nucleotide Polymorphisms, SNPs) in diesem Gen führen zum Austausch bestimmter Aminosäuren der VKORC1. Bei resistenten Stämmen der Wanderratte ist je nur eine Aminosäure ausgetauscht. Bestimmte Sequenzänderungen der VKORC1 haben eine Änderung der Eigenschaften des Enzyms zur Folge, welche die Blockierung des Targetenzyms durch die antikoagulanten Wirkstoffe erschweren. Die Folge sind eine erhöhte Toleranz gegenüber antikoagulanten Wirkstoffen, wie sie auch bei Menschen auftreten und den therapeutischen Einsatz der entsprechenden Medikamente erschweren kann. Bei Ratten und Mäusen kann die Toleranz so stark ausgeprägt sein, dass entsprechende antikoagulante Bekämpfungsmittel trotz fachgerechter Anwendung keinen ausreichenden Bekämpfungserfolg bewirken. Es wird dann, bei guter Köderannahme durch die Nager, von praktischer Resistenz gesprochen (Greaves, 1994, Buckle A.P. and Smith R.H. eds. "Rodent Pests and their Control", CABI, Wallingford, Oxon, UK, Seiten 197-217).

Sequenzänderungen im Gen VKORC1 wirken sich unterschiedlich stark aus, je nachdem, in welchem Bereich des Gens sie auftreten. Insbesondere Sequenzänderungen im Bereich zwischen den Aminosäure-Positionen 120 bis 140 des Gens vermitteln jeweils ein bestimmtes Resistenzniveau bei Ratten und Hausmäusen. Die beispielsweise in Deutschland verbreitete Substitution der Aminosäure Tyrosin durch Cystein an der Position 139 der VKORC1 (Tyr139Cys, Y139C) macht Wanderratten und Hausmäuse nahezu völlig unempfindlich gegenüber Warfarin, Coumatetralyl, Bromadiolone, und bei Ratten auch Difenacoum. Individuen mit dieser Variante der VKORC1 sind in der Lage, auch bei hoher Dosierung von Warfarin und anderen Wirkstoffen ihre Blutgerinnung aufrecht zu erhalten.

Insbesondere bei der Wanderratte sind die durch verschiedene SNPs gekennzeichneten Stämme hinsichtlich ihrer z.T. sehr unterschiedlichen Empfindlichkeit bzw. Resistenz sehr gut untersucht. Z.B. ist bekannt, dass der Stamm Y139S (bekannt aus Wales) zwar etwas toleranter gegenüber Warfarin ist, aber keine praktische Resistenz gegen das Antikoagulant der zweiten Generation Bromadiolone (Buckle et al. 2007, Int. J. Pest Mgt. 53 (4), 291-297) vorliegt. Die Resistenz ist wesentlich stärker ausgeprägt im Stamm Y139C, der wahrscheinlich am weitesten verbreitete resistente Stamm (Dänemark, Deutschland, Niederlande, Großbritannien, Frankreich, Belgien). In Labor- und Feldversuchen wurde nachgewiesen, dass dieser Stamm gegen alle Wirkstoffe der ersten Generation resistent ist, aber auch gegen die Wirkstoffe der zweiten Generation Bromadiolone und Difenacoum (siehe u.a. Buckle et al. 2012, Pest. Manag. Sci. 69: 233-239, Endepols et al. 2007, Pest Manag. Sci. 68: 348-354) Eine Übersicht über die Resistenz von Wanderratten gegen Antikoagulantien findet sich in "Anticoagulant resistance in the Norway rat and Guidelines for the management of resistant rat infestations in the UK", 2010, U.K., URL:http://www.bpca.org.uk/assets/ RRAG_Resistance_Guideline.pdf.

Eine weitere Wirkstoffgruppe, die als Rodentizid verwendet werden kann, sind zwei Formen des Vitamin D, Ergocalciferol und Cholecalciferol (Vitamin D2 und D3). Diese Wirkstoffe besitzen kaum Potential der Rückstandsbildung und stellen deshalb keine Gefahr für Beutegreifer dar, die sich von Ratten oder Mäusen ernähren. Eine Überdosis des Vitamins führt zu Hypercalcämie. Deswegen wird Cholecalciferol als Rodentizid verwendet. Allerdings konnten sich die Calciferole im Vergleich zu den Antikoagulantien bisher im Markt nicht durchsetzen, weil sie in den verwendeten Konzentrationen insbesondere bei Ratten Köderscheu, also eine Meidung des Köders, verursachen bzw. die Attraktivität des Köders für Ratten reduzieren (Prescott et al. 1992, Proc. 15th Vertebrate Pest Conf., Univ. Calif., Davis, 218-223). Schon nach einem Tag des Fraßes von Köder mit 0,075% Gehalt Cholecalciferol entwickeln Ratten Köderscheu, d.h. sie fressen nicht mehr vom Köder sondern nur noch von anderen Nahrungsquellen.

Es ist aber auch bekannt, dass Calciferole die Wirkung bestimmter antikoagulanter Rodentizide in bestimmten Rattenstämmen verstärken, also synergistisch wirken können. Dieser Effekt wurde nachgewiesen bei Warfarin-resistenten Ratten des Wales-Stammes Y139S (Kerins et al. 2002, Comp. Clin. Path. 11, 59-64). Bei nicht resistenten, also für antikoagulante Rodentizide normal empfindlichen Tieren ist bestenfalls ein additiver Effekt der beiden Wirkstoffe nachweisbar (Greaves et al. 1974, J. Hyg. Camb. 73, 341-352).

Bisher ging man davon aus, dass dieser verstärkende Effekt nur bei Stämmen auftritt, die resistent sind gegen Antikoagulantien der ersten Generation, insbesondere Warfarin, nicht aber bei stärker resistenten Stämmen, die auch resistent sind gegen Wirkstoffe der zweiten Generation wie Bromadiolone.

Es war daher eine Aufgabe der vorliegenden Erfindung, Mittel bereitzustellen, die gegen Wanderratten eingesetzt werden können, die gegen Antikoagulantien der zweiten Generation eine praktische Resistenz aufweisen. Eine weitere Aufgabe war es Mittel zu finden, die weder auf die akut toxischen Substanzen noch auf die besonders hochpotenten und Rückstände bildenden Antikoagulantien der zweiten Generation zurückgreifen müssen, jedoch aber trotzdem effektiv gegen Antikoagulantien-resistente Wanderratten sind. Eine weitere Aufgabe der vorliegenden Erfindung war es darüber hinaus die Rückstandswerte von Antikoagulantien in den Nagern zu minimieren, um Sekundärvergiftungen von Beutegreifern möglichst zu verhindern.

Die Aufgaben wurden durch die Verwendung eines Mittels zur Bekämpfung von Wanderratten, die gegen mindestens ein Antikoagulant der zweiten Generation resistent sind, enthaltend mindestens ein Hydroxycumarin und mindestens ein Vitamin D-Analog, gelöst. Die erfindungsgemäss verwendeten Mittel werden zur Bekämpfung von Wanderratten eingesetzt, die zusätzlich gegen mindestens ein Antikoagulant der ersten Generation resistent sind Die Wanderratten besitzen eine Gensequenzänderung in der Vitamin-K-Epoxid-Reduktase Complex 1 Subunit 1 (VKORC1) und sind vom Stamm L120Q Berkshire, L120Q Hampshire, Y139C oder Y139F.

Antikoagulantien im Sinne der Erfindung sind Stoffe aus der Gruppe der Indandionderivate oder der Hydroxycumarine, 1. und 2. Generation. Diese Substanzen werden weltweit für die Bekämpfung von Nagetieren verwendet (vgl. beispielsweise DE 2506769; JP 48023942; CH 481580; Paposci (1974): Beihefte Z. Angew. Zool. S. 155 und DE 2506769). Als Beispiele für antikoagulierende Substanzen der ersten Generation seien die 4-Hydroxycumarinderivate (1-Phenyl-2-acetyl)-3-ethyl-4-hydroxycumarin ("Warfarin"), 3-(a-Acetonyl-4-chlorbenzyl)-4-hydroxycumarin ("Coumachlore"), 3-(1',2',3',4'-Tetrahydro-1'-naphthyl)-4-hydroxycumarin ("Coumatetralyl"), und die Indandionderivate, wie 1,1-Diphenyl-2-acetyl-indan-1,3-dion ("Diphacinone") und (1'-p-Chlorphenyl-1'-phenyl)-2-acetyl-indan-1,3-dion ("Chlorodiphacinone") genannt. Aus der zweiten Generation seien genannt: 3-[3-(4'-Hydroxy-3'-cumarinyl)-3-phenyl-1-(4'-brom-4'-biphenyl)-propan-1-ol ("Bromadiolone"), 3-(3'-Paradiphenylyl-1',2',3',4'-tetrahydro-1'-naphthyl)-4-hydroxycumarin ("Difenacoum"), 3-[3-4'-bromobiphenyl-4-yl) 1,2,3,4-tetrahydro-1naphthyl]-4-hydroxycoumarin ("Brodifacoum"), 4-hydroxy-3 [1,2,3,4-tetrahydro-3 - [4-(4-triflouromethylbenzyloxy)phenyl]-1-naphthyl]coumarin ("Flocoumafen") und die Hydroxy-4-benzothiopyranone z.B. "Difethialone".

Erfindungsgemäss findet die Verwendung der beschriebenen Mittel gegen Wanderratten statt, gegen mindestens ein Antikoagulant der zweiten Generation ausgewählt aus der Gruppe von Bromadiolone und Difenacoum (vorzugsweise zumindest Bromadiolone) praktische Resistenzen aufweisen. Diese praktische Resistenz zeichnet sich durch einen Resistenzfaktor von mindestens 7 gegenüber Bromadiolone bzw. von mindestens 2 gegenüber Difenacoum aus.

Noch bevorzugter werden die erfindungsgemäß beschriebenen Mittel zusätzlich auch zur Bekämpfung von Wanderratten eingesetzt, die gegen Antikoagulantien der ersten Generation ausgewählt aus der Gruppe von Warfarin, Coumatetralyl, Diphacinone und Chlorophacinone (vorzugsweise diese Gruppe aber ohne Diphacinone und Chlorophacinone) praktische Resistenzen aufweisen. Vorzugsweise liegt eine praktische Resistenz gleichzeitig gegen Warfarin, Coumatetralyl und Bromadiolone vor. Noch bevorzugter liegt zusätzlich auch noch eine weitere praktische Resistenz gegen Difenacoum vor.

Der Begriff "Resistenz/en" im Sinne der Erfindung bezieht sich auf die "praktische Resistenz", die dadurch gekennzeichnet ist, dass das betreffende Rodentizid auch bei fachgerechter Anwendung und guter Annahme des Köders durch die Nagetiere keine ausreichende biologische Wirksamkeit mehr erreicht (siehe auch Greaves - 1994, Buckle A.P. and Smith R.H. eds. "Rodent Pests and their Control", CABI, Wallingford, Oxon, UK, Seiten 197-217). Der Fachmann kann gemäß dieser Definition klar und eindeutig beurteilen, ob eine praktische Resistenz vorliegt oder nicht. Generell kann der Grad der "Resistenz" durch Angabe eines Resistenzfaktors beschrieben werden. Der Resistenzfaktor (RF) wird üblicherweise auf Basis der tödlichen Dosis (LD₅₀) oder der effektiven Dosis (ED₅₀) berechnet. Die LD₅₀ ist eine statistisch ermittelte Dosis, die bei 50 % der Testtiere als letal zu erwarten ist. Die ED₅₀ ist eine statistische ermittelte Dosis eines Wirkstoffs, die bei 50 % der Tiere eine bestimmte Reaktion hervorruft, erfindungsgemäß ist das ein kritischer Wert in der Blutgerinnung. LD₅₀ und ED₅₀ werden jeweils pro Stamm experimentell ermittelt. Der RF ist der Quotient aus der LD₅₀ bzw. ED₅₀ des resistenten Stammes und eines empfindlichen Stammes, der als Referenz gilt. Bis in die 1980er Jahre wurden RF auf Basis der LD₅₀ ermittelt. Diese Methode wurde später durch Blutgerinnungstests (BCR Resistance Tests) ersetzt, mit denen die ED₅₀ genauer ermittelt werden können (Prescott et al. 2007: A standardised BCR-resistance test for all anticoagulant rodenticides. Int. J. Pest Mgt. 53 (4), 265-272). Erfindungsgemäß bevorzugt wird demnach RF durch den Quotient aus der ED₅₀ des resistenten Stammes und eines empfindlichen Stammes, der als Referenz gilt, berechnet. ED₅₀ wird erfindungsgemäß bevorzugt mit dem BCR Resistance Test gemäß der vorbenannten Literaturreferenz bestimmt.

Eine bevorzugte Ausführungsform der Erfindung bezieht sich auf die Verwendung der beschriebenen Mittel zur Bekämpfung von Wanderratten, wobei eine praktische Resistenz gegenüber Bromadiolone vorliegt und sich die praktische Resistenz durch einen Resistenzfaktor (vorzugsweise nach BCR Resistance Test bestimmt, siehe Prescottt et al. 2007) von mindestens 7, vorzugsweise mindestens 10, noch bevorzugter mindestens 12 und am bevorzugtesten mindestens 15 gegenüber Bromadiolone auszeichnet.

Eine weitere bevorzugte Ausführungsform der Erfindung bezieht sich auf die Verwendung der beschriebenen Mittel zur Bekämpfung von Wanderratten, wobei eine praktische Resistenz gegenüber Difenacoum vorliegt und sich die praktische Resistenz durch einen Resistenzfaktor (vorzugsweise nach BCR Resistence Test bestimmt) von mindestens 2 vorzugsweise mindestens 2,9 noch bevorzugter mindestens 4,8 und am bevorzugtesten mindestens 12 gegenüber dem Difenacoum auszeichnet.

Stärker resistente Stämme zeichnen sich insbesondere durch eine Bromadiolone-Resistenz aus. In der nachfolgenden Tabelle 1 werden die RFs für Bromadiolone in den jeweiligen resistenten Wanderratten-Stämme auflistet:

**Tabelle 1: Resistenzfaktoren für Bromadiolone in den bekannten resistenten Stämmen der Wanderratte (Rattus norvegicus). RF für Y139S wurde auf Basis der LD₅₀ bestimmt (BCR Resistance Test Daten liegen für Y139S noch nicht vor) die RF der anderen Stämme wurden mittels des BCR Resistance Test ermittelt (Quelle: Y139S: Buckle et al. 2007, Int. J. Pest Mgt. 53 (4), 291-297); andere Stämme: Tabelle 2, S. 8, RRAC Guidelines on Anticoagulant Rodenticide Resistance Management; www.rrac.info),**

| Stamm | Y139S | Y139C | Y139F | L120Q Hampshire |
|---|---|---|---|---|
| RF | 2,7 - 6,9 (auf Basis der LD₅₀ bestimmt) | 15 - 17 (mittels BCR Resistence Test ermittelt) | 7-9 (mittels BCR Resistence Test ermittelt) | 10-14 (mittels BCR Resistence Test ermittelt) |

Eine weitere bevorzugte Variante der vorliegenden Erfindung betrifft die Verwendung der erfindungsgemäß beschriebenen Mittel zur Bekämpfung von Wanderratten, wobei die praktische Resistenz mindestens gegenüber Bromadiolone vorliegt und sich die praktische Resistenz:
- beim Stamm Y139C durch einen Resistenzfaktor von mindestens 15, vorzugsweise mindestens 17 und noch bevorzugter mindestens 20,
- beim Stamm Y139F durch einen Resistenzfaktor von mindestens 7, vorzugsweise mindestens 9, und noch bevorzugter mindestens 12;
- beim Stamm L120Q Hampshire durch einen Resistenzfaktor von mindestens 10, vorzugsweise mindestens 14 und noch bevorzugter mindestens 17
gegenüber Bromadiolone auszeichnet.

Eine weitere bevorzugte Variante der vorliegenden Erfindung betrifft die Verwendung der erfindungsgemäß beschriebenen Mittel zur Bekämpfung von Wanderratten, wobei die praktische Resistenz mindestens gegenüber Difenacoum vorliegt und sich die praktische Resistenz:
- beim Stamm Y139C durch einen Resistenzfaktor von mindestens 1,6, vorzugsweise mindestens 2 und noch bevorzugter mindestens 2,9,
- beim Stamm L120Q Hampshire durch einen Resistenzfaktor von mindestens 4,8, vorzugsweise mindestens 12 und noch bevorzugter mindestens 15
gegenüber Difenacoum auszeichnet.

Aus Erfahrungen und Feldversuchen mit verschiedenen Antikoagulantien lässt sich ableiten, dass eine 100-prozentige Bekämpfung mit einem Antikoagulant alleine nicht mehr möglich ist, wenn der RF den Bereich von 3 bis 6 übersteigt. In Abhängigkeit vom Stamm und vom verwendeten Antikoagulant können Schwierigkeiten bereits bei RF ab dem Bereich 1,5 bis 3 auftreten.

Die beschriebenen Mittel eignen sich für die Bekämpfung aller resistenten Schadnagerstämme u.a. Vertreter der Gattungen *Microtus, Arvicola, Rattus* und *Mus.* Im Siedlungsbereich des Menschen besonders zu nennen ist die Hausmaus (*Mus musculus*/*domesticus*) die Wanderratte (*Rattus norvegicus*)*,* sowie die Haus- oder Dachratte (*R. rattus*)*.* Erfindungsgemäss werden die beschriebenen Mittel gegen resistente Wanderratten (*Rattus norvegicus*) eingesetzt. Die Anwendung ist im Freiland möglich, sowie in Gebäuden, auch Tierstallungen, Lager- und Produktionsräumen sowie in der Kanalisation.

Der Stand des Wissens über die Empfindlichkeit aller bekannten resistenten Wanderratten-Stämme wird in der nachfolgenden Tabelle 2 zusammengefasst. Die Daten beruhen auf Analysen aller verfügbaren Daten durch Resistenz-Arbeitsgruppen in Großbritannien und Deutschland (siehe u.a.: http://www.bpca.org.uk/assets/RRAG_Resistance_Guideline.pdf, Esther et al. 2014, Bundesgesundheitsblatt. DOI 10.1007/s00103-013-1930-z). Nur beim Stamm Y139S (Wales) liegt keine praktische Resistenz gegenüber Antikoagulantien der zweiten Generation, die anderen Stämme sind z.T. unterschiedlich ausgeprägt praktisch resistent gegen diese Wirkstoffe. D.h. diese Stämme sind stärker resistent als der Stamm Y139S.

**Tabelle 2: Die durch VKORC1-Polymorphismen gekennzeichneten resistenten Stämme der Wanderratte (Rattus norvegicus), und deren praktische Resistenz gegen die Antikoagulantien der ersten Generation (Warfarin, Chlorophacinone, Coumatetralyl) und der zweiten Generation (Bromadiolone, Difenacoum, Brodifacoum, Flocoumafen, Difethialone). Einschätzung basiert auf Feldversuchen und Erfahrungswerten.**

| VKORC1 - Stamm | **X = Stamm weist eine praktische Resistenz auf gegen:** | | | | | |
|---|---|---|---|---|---|---|
| | Warfarin, Coumatetralyl, Chlorophacinone | Bromadiolone | Difenacoum | Brodifacoum | Flocoumafen | Difethialone |
| L120Q Berkshire | X | X | X | - | - | - |
| L128Q | X | X | - | - | - | - |
| Y139C | X | X | X | - | - | - |
| Y139F | X | X | - | - | - | - |
| Y139S | X | - | - | - | - | - |

Der Stamm Y139C spielt eine herausragende Rolle. Zum einen ist er neben L120Q Berkshire der am stärksten resistente Stamm. Zum anderen ist er - und das unterscheidet ihn von L120Q - der am weitesten verbreitete Stamm (Tabelle 3). Ein Nachweis der Wirksamkeit eines Mittels gegen diesen Stamm wird deshalb als genereller Nachweis der Wirksamkeit gegen resistente Ratten angesehen, einzig der Stamm L120Q Berkshire könnte einen vergleichbaren Resistenzgrad aufweisen.

**Tabelle 3: Örtliche Verbreitung resistenter Rattenstämme**

| Stamm (VKORC1-Marker) | Land |
|---|---|
| Y139C | Dänemark, Niederlande, Belgien, Deutschland, GB |
| Y139F | Frankreich, Belgien |
| Y139S | Wales (GB) |
| L120Q | Hampshire (GB), Berkshire (GB) |
| L128Q | Schottland |

Der resistente Rattenstamm "Westfalen", gekennzeichnet durch den VKORC1-Polymorphismus Y139C, ist resistent gegen die Antikoagulantien der zweiten Generation Bromadiolone und Difenacoum, sowie die Wirkstoffe der ersten Generation. Fraßköder, die einen dieser Wirkstoffe in der zugelassenen Konzentration beinhalten, sind nicht wirksam gegen Tiere dieses Stammes. So wurde z.B. bei Fraßtests im Labor mit Bromadiolone und Coumatetralyl keine Mortalität beobachtet.

Die Erfindung betrifft die Verwendung eines erfindungsgemäß beschriebenen Mittels zur Bekämpfung von Wanderratten, die zumindest gegen ein Antikoagulant der zweiten Generation (und vorzugsweise auch gleichzeitig zumindest gegen ein Antikoagulant der ersten Generation) resistent sind, wobei die Wanderratten eine Gensequenzänderungen in der Vitamin-K-Epoxid-Reduktase Complex 1 Subunit 1 (VKORC1) aufweisen. In der erfindungsgemässen Verwendung werden die beschriebenen Mittel zur Bekämpfung von resistenten Wanderratten der Stämme L120Q Berkshire, L120Q Hampshire, Y139C, Y139F verwendet. Bevorzugt ist der Einsatz zur Bekämpfung des Stammes Y139C.

In der Ausführungsform der Erfindung enthält das erfindungsgemäß verwendete Mittel als mindestens ein Hydroxycumarin ein Hydroxycumarin ausgewählt aus der Gruppe von Warfarin, Coumachlore, Coumatetralyl, Bromadiolone, Difenacoum und Flocoumafen. Bevorzugt wird nur ein Hydroxycumarin eingesetzt. Wiederum bevorzugt wird erfindungsgemäß zumindest (und vorzugsweise als Hydroxycumarin alleinig) Coumatetralyl eingesetzt.

Vitamin D-Analoge im Sinne der Erfindung sind Ergocalciferol und Cholecalciferol. Sie sind Derivate eines 3β-hydroxy-Δ5,7-17β-substituierten Steroids. Calciferole werden durch Bestrahlung aus Ergosterol gebildet. Ferner sind andere Analoge und Metaboliten des Vitamin D geeignet, wie z.B. Hydroxy-Cholecalciferol, Dihydroxy-Cholecalciferol, Hydroxy-Ergocalciferol, Dihydroxy-Ergocalciferol. In der Ausführungsform der Erfindung enthält das erfindungsgemäß verwendete Mittel als mindestens ein Vitamin D-Analog Ergocalciferol und/oder Cholecalciferol. Noch bevorzugter enthält das erfindungsgemäß verwendete Mittel als Vitamin-D-Analog nur Cholecalciferol.

Überraschenderweise stellte sich erfindungsgemäß heraus, dass Coumatetralyl-Köder dann insbesondere wirksam gegen oben beschriebene resistente Ratten sind, wenn eine geringe Menge Cholecalciferol zugesetzt wird. Bereits der Zusatz von Cholecalciferol in einer Konzentration von 50 mg/kg zu der üblichen Konzentration Coumatetralyl bewirkt hohe Mortalitätsraten bei resistenten Ratten. Schon mit einer Konzentration des Cholecalciferols von 100 mg/kg, können Mortalitätsraten von bis zu 100 % erzielt werden (siehe Beispiele). Coumatetralyl allein bewirkt erwartungsgemäß keine Mortalität. Da auch Cholecalciferol bei 100 mg/kg allein keine Mortalität bewirkt, ist die Wirkung allein auf eine verstärkte Wirkung des Coumatetralyl zurückzuführen. Die bisher publizierten Nachweise einer verstärkenden Wirkung von Cholecalciferol beziehen sich ausschließlich auf den nur schwach resistenten Wales-Stamm Y139S, der nur leicht resistent ist gegen die Wirkstoffe der ersten Generation Warfarin und Coumatetralyl und keine praktische Resistenz gegenüber einem Antikoagulant der zweiten Generation aufweist (siehe auch Tabelle 2, S. 16, RRAC Guidelines on Anticoagulant Rodenticide Resistance Management; www.rrac.info).

Eine weitere Ausführungsform betrifft die erfindungsgemässe Verwendung der beschriebenen Mittel, wobei das mindestens eine Hydroxycumarin in einer Konzentration von 5 mg/kg bis 1000 mg/kg, bevorzugt zwischen 20 und 800 mg/kg (erste Generation Hydroxycumarine: Warfarin, Coumachlore, Coumatetralyl) bzw. 10 und 100 mg/kg (2. Generation Hydroxycumarine: Bromadiolone, Difenacoum und Flocoumafen) und besonders bevorzugt zwischen 20 und 750 mg/kg (bezogen auf die 1. Generation Hydroxycumarine) bzw. 10 und 50 mg/kg (bezogen auf die 2. Generation Hydroxycumarine) und ganz besonders bevorzugt zwischen 250 und 800 mg/kg (bezogen auf die 1. Generation Hydroxycumarine bzw. 20 und 50 mg/kg (bezogen auf die 2. Generation Hydroxycumarine), eingesetzt wird. Falls mehrere Hydroxycumarine eingesetzt werden, befindet sich die Gesamtkonzentration der Hydroxycumarine auch innerhalb der oben beschriebenen Bereiche.

Eine weitere Ausführungsform betrifft die erfindungsgemässe Verwendung der beschriebenen Mittel, wobei das mindestens eine Vitamin D-Analogon in einer Konzentration von 10 bis 1000 mg/kg, bevorzugt zwischen 20 und 200 mg/kg, besonders bevorzugt zwischen 25 und 100 mg/kg, ganz besonders bevorzugt zwischen 50 und 100 mg/kg, eingesetzt wird. Falls mehrere Vitamin D-Analoga eingesetzt werden, befindet sich die Gesamtkonzentration der Vitamin D-Analoga auch innerhalb der oben beschriebenen Bereiche.

Um den Effekt des Zusatzes geringer Mengen Cholecalciferol zu Ködern mit einem Antikoagulant der ersten Generation auch unter Praxisbedingungen zu beweisen, wurden Standard-Feldversuche durchgeführt. Neben erfolgreichen Versuchen mit 100 mg/kg Cholecalciferol wurde auch ein Versuch mit geringerer Konzentration von nur 50 mg/kg in Kombination mit Coumatetralyl durchgeführt. Selbst diese reduzierte Menge Cholecalciferol erwies sich als durchaus wirksam (siehe Beispiel 2). Hier wurde ein Befall, der ca. 50 % resistente Ratten des Stammes Y139C, also Bromadiolone-resistent, enthielt, nahezu komplett getilgt.

Der Rattenstamm Y139C weist eine praktische Resistenz gegen zwei antikoagulante Rodentizide der zweiten Generation auf. Bis auf eine nur in Berkshire (England) nachgewiesene Variante des Stammes L120Q, besitzt kein Stamm ein so hohes Resistenzniveau. Eine verstärkende Wirkung geringer Mengen Cholecalciferol wurde bisher nur bei dem Stamm Y139S nachgewiesen, der deutlich weniger tolerant ist und keine praktische Resistenz gegen Wirkstoffe der zweiten Generation aufweist. Es war zwar ein verstärkender Effekt auf die blutgerinnungshemmende Wirkung eines Antikoagulants in diesem Stamm nachweisbar (Kerins et al. 2002, Comp. Clin. Path. 11, 59-64.). Dieser Effekt war aber nicht so stark, dass eine ausreichende Wirkung bei wesentlich stärker resistenten Ratten zu erwarten war.

Mit der Addition einer an sich nicht wirksamen, geringen Menge Cholecalciferol zu einem antikoagulanten Rodentizid der ersten Generation können Bekämpfungsmittel hergestellt werden, die gegen stark resistente Rattenstämme wirken und welche die Vorzüge der antikoagulanten Wirkstoffe haben (verzögerte Wirkung, Antidot), jedoch auf die Verwendung von Antikoagulantien der zweiten Generation verzichten. Damit werden Umweltrisiken deutlich reduziert, die mit der Verwendung dieser persistenten Wirkstoffe in Zusammenhang stehen.

Ein weiterer Gegenstand der Erfindung bezieht sich auf ein Verfahren zur Bekämpfung von Wanderratten, die zumindest gegen ein Antikoagulant der zweiten Generation eine praktische Resistenz aufweisen, dadurch gekennzeichnet, dass ein Mittel welches mindestens ein Hydroxycumarin und mindestens ein Vitamin D-Analog enthält, eingesetzt wird. Analog wie für die beschriebene Verwendung gelten auch alle limitierenden Merkmale für das beschriebene Verfahren zur Bekämpfung von Wanderratten.

Die erfindungsgemäß verwendeten Mittel werden in Form von allen Arten rodentizider Fraßköder formuliert. Diese sind aus dem Stand der Technik hinlänglich bekannt. Zu empfehlen sind solche, die auf Cerealien basieren, wie Haferflocken, Weizen, Mais u.a.. Diese können schüttfähige Köder aus einem oder mehreren Getreidebestandteilen sein, extrudierte Köder wie Granulate oder Pellets, Wachsblöcke, weiche oder pastöse, auf pflanzlichen Fetten und Mehlen basierende Mischungen, oder Gele, die auf öligen oder wässrigen Formulierungen beruhen. Besonders zu empfehlen sind pastöse Köder, die aus Cerealien oder Mehlen und Pflanzenfett bestehen. Gut geeignet sind z.B. pastöse Köder in Portionspackungen von 10 g bis 200 g.

Weitere Darreichungsformen sind flüssige oder gelierte Tränken sowie sogenannte Kontaktmittel wie Pulver und Schäume. Diese Mittel sind keine Fraßköder, sondern werden so ausgebracht, dass sie am Fell der Nager haften und erst beim Putzen oral aufgenommen werden.

In weiteren Versuchen (siehe Beispiel 3) mit Ratten stellte sich nun zusätzlich überraschenderweise heraus, dass bereits während des dritten Tages vom Fraß eines Köders mit einem Hydroxycumarin und Cholecalciferol in geringer Konzentration (vorzugsweise bei einer Konzentration von 50 bis 100 mg/kg und noch bevorzugter zwischen 75 und 100 mg/kg) ein vollständiger Abbruch der Fraßaktivität auftritt ("Stop-Feeding Effekt"). Dies ist insbesondere dann zu beobachten, wenn ein Fraßköder mit einer homogenen Verteilung von Hydroxycumarin und Cholecalciferol, die in Fetten gelöst sind (vorzugsweise Pastenköder oder Wachsblöcke), verabreicht wird. Offensichtlich ist die Verfügbarkeit des Cholecalciferols in solchen Fraßködern sehr gut, in denen es in Fett gelöst und homogen verteilt vorliegt. Der Stoff wird schnell und nahezu vollständig im Verdauungstrakt aufgenommen. Besonders überraschend war bei solchen Versuchen, dass trotz des "Stop-Feeding" Effekts mindestens 90 % der Ratten eine tödliche Dosis des Antikoagulant aufgenommen hatten und an inneren Blutungen verendeten. Wider Erwarten führte eine Verkürzung der Fraßperiode durch den "Stop-Feeding-Effekt" nicht zu einer erheblich verringerten Mortalitätsrate.

In Versuchen mit einem Antikoagulant der ersten Generation (Coumatetralyl, siehe Beispiel 3) wird generell nur etwa 50 % bis 60 % der Ködermenge aufgenommen, wie von Ködern gleicher Rezeptur mit dem Antikoagulant, aber ohne Cholecalciferol. Für den Fachmann zu erwarten wäre bei dieser Reduktion der Aufnahme des Köders bzw. des Wirkstoffs, dass sich die in der Leber nachzuweisenden Rückstände des antikoagulanten Wirkstoffs im gleichen Verhältnis reduzieren. Völlig überraschend aber wurde festgestellt, dass diese Rückstände in Versuchsgruppen, die das Antikoagulant in Kombination mit Cholecalciferol erhielten, wesentlich weiter reduziert sind als sich aus dem Verhältnis der Fraßmengen schließen ließe.

In einer weiteren Ausführungsform der Erfindung werden deshalb die erfindungsgemäß verwendeten Mittel zusätzlich insbesondere auch zur Minderung der Rückstandswerte des verwendeten bzw. der verwendeten Hydroxycumarin(e) im Nagetier (und insbesondere in der Leber des Nagetiers) eingesetzt. Mit einer solchen Anwendung der erfindungsgemäß verwendeten Mittel werden Umweltrisiken, die mit dem Einsatz der Antikoagulantien verbunden sind, erheblich reduziert. Dazu gehört zum Beispiel die Gefahr von Sekundärvergiftungen von Beutegreifern wie Greifvögel, Eulen oder Wiesel die Nagetiere fressen, die rodentizide Fraßköder zu sich genommen haben. Ein weiterer Gegenstand der Erfindung bezieht sich auf das erfindungsgemäß beschriebene Verfahren, wobei dieses Verfahren vorzugsweise auch zur Minderung der Rückstandswerte des verwendeten bzw. der verwendeten Hydroxycumarin(e) in der Wanderratte eingesetzt wird.

### Beispiele

### Beispiel 1:

### Fraßversuch mit Wanderratten des resistenten Stammes Y139C, Köder mit Coumatetralyl 375 mg/kg und Cholecalciferol 100 mg/kg.

6 Wanderratten vom Stamm Y139C (2 Männchen und 4 Weibchen) erhielten nachfolgend beschriebene Fraßköder über einen Zeitraum von 4 Tagen. Verzehr und Mortalität wurden danach bestimmt. Eine Gruppe (6 Ratten, Gruppe 1) wurde mit einem Fraßköder bestehend aus Coumatetralyl (375 mg/kg) und Cholecalciferol (100 mg/kg) gefüttert. Die andere Gruppe (Gruppe 2) wurde mit Coumatetralyl alleine (375 mg/kg) gefüttert. Alle Tiere konsumierten die Fraßköder bis auf ein Tier der Gruppe 2. Der Verzehr war am höchsten während der ersten 24 Stunden. Am dritten und vierten Tag wurde nur noch wenig verzehrt. Alle 6 Ratten starben nach 5 bis 7 Tagen in der Gruppe 1 nach Beginn des Versuches. Zwei Männchen konsumierten jeweils ca. 47 mg/kg Coumatetralyl und 12.5 mg/kg Cholecalciferol (bezogen auf das Körpergewicht). Die Weibchen konsumierten 50 bis 79 mg/kg Coumatetralyl und 13 bis 21 mg/kg Cholecalciferol (jeweils bezogen auf das Körpergewicht). In Gruppe 2 wurde keine Mortalität beobachtet obwohl die Tiere 94 mg/kg Coumatetralyl (Mittelwert bezogen auf das Körpergewicht) verzehrt haben. Die Kombination von Coumatetralyl und Cholecalciferol war letal und zeigt, dass diese Kombination gegen resistente Wanderratten des Stammes Y139C wirkt.

### Beispiel 2:

### Feldversuch auf einem Landwirtschaftbetrieb im Resistenzgebiet Münsterland, Westfalen, Deutschland.

Das Hauptverbreitungsgebiet des Bromadiolone-resistenten Stammes Y139C ist das Münsterland (Deutschland). Ratten dieses resistenten Stammes sind auf zahlreichen tierhaltenden Landwirtschaftsbetrieben zu finden. Sie sind resistent gegen Coumatetralyl und die Antikoagulantien der zweiten Generation Bromadiolone und Difenacoum (Buckle et al. 2012, Pest Manag Sci 69: 233-239; Endepols et al. 2007, Int. J. Pest Mgt. 53 (4), 285-290, Endepols et al. 2012, Pest Manag. Sci. 68: 348-354). Auf einem solchen Betrieb wurde ein Feldversuch durchgeführt mit Köder enthaltend Coumatetralyl 375 mg/kg und Cholecalciferol 50 mg/kg. Vor der Bekämpfung mit dem rodentiziden Köder wurde Häufigkeit und Grad der Resistenz auf dem Hof ermittelt. Dafür wurden Ratten gefangen und im Blutgerinnungstest mit Coumatetralyl getestet. Ergebnis: ca. 46 % der Ratten auf dem Hof waren resistent für Coumatetralyl mit Resistenzfaktor bei 60 bis 80. Anschließend wurde der Köder im Standardverfahren für 35 Tage angewendet. Der Bekämpfungserfolg lag nach Fraß von 7,3 kg des Köders bei 94 %. Ein Resultat auf diesem Niveau wird generell als sehr guter Erfolg und als Nachweis der Wirksamkeit gewertet, denn es muss unter den Bedingungen der Praxis mit Zuwanderung von Ratten aus dem Umland gerechnet werden. Für die amtliche Autorisierung eines Produktes werden 90 % Bekämpfungserfolg als Wirksamkeitsnachweis gewertet. Das Resultat dieses Feldversuchs wird deshalb als Nachweis der vollen Wirksamkeit von Köder mit Coumatetralyl und Cholecalciferol gegen den Bromadiolone-resistenten Stamm Y139C gewertet.

### Beispiel 3: Experimenteller Beweis des Stop-Feeding-Effekts und der Rückstandsreduzierung

### Methode:

In einem Laborversuch mit Wanderratten (*Rattus norvegicus*) eines wilden Stammes wurden die Fraßmengen zweier Köder verglichen, die bis auf den Zusatz von Cholecalciferol identische Zusammensetzung hatten. Beide Köder waren fettbasierte Pastenköder, Köder A mit dem Antikoagulant Coumatetralyl 375 mg/kg, und Köder B mit Coumatetralyl 375 mg/kg und Cholecalciferol 100 mg/kg. Beide Köder wurden Gruppen von je sechs männlichen und weiblichen adulten Ratten über 10 Tage ad libitun angeboten. Es wurden die individuellen täglichen Fraßmengen bestimmt, und in Relation zum Körpergewicht berechnet. In allen während des Versuchs verendeten Ratten wurden die Coumatetralyl-Rückstände in der Leber und im Rest des Körpers bestimmt.

### Ergebnis:

In Gruppe A (nur Coumatetralyl) wurden vom Köder 222,1 g/kg konsumiert. In Gruppe B (Coumatetralyl und Cholecalciferol) wurden 126,5 g/kg, also nur 57% der in Gruppe A gefressenen Menge konsumiert. Diese Differenz ist auf einen "Stop-Feeding Effekt" in Gruppe B zurückzuführen, die am dritten Tag den Fraß einstellte (Tabelle 4). Die Mortilität in Gruppe A war 11/12, in Gruppe B 12/12. Die Rückstände des Coumatetralyl in den Lebern der Tiere differierten stärker als anhand der Fraßdaten zu erwarten war: Sie betrugen in Gruppe B nur 31 % der Werte in Gruppe A.

**Tabelle 4: Fraßmengen Köder in g/kg Körpergewicht/Tag in Gruppen von je 12 Ratten, und Rückstände von Coumatetralyl in der Leber (Durchschnittswerte). Gruppe A: Coumatetralyl 375 mg/kg; Gruppe B: Coumatetralyl 375 mg/kg + Cholecalciferol 100 mg/kg.**

| | Gruppe A | Gruppe B | Verhältnis B : A |
|---|---|---|---|
| Köder Tag 1 (g/kg) | 50,4 | 53,5 | 1,06 |
| Köder Tag 2 (g/kg) | 50,4 | 51,9 | 1,03 |
| Köder Tag 3 (g/kg) | 41,5 | 20,7 | 0,50 |
| Köder Tag 4 (g/kg) | 35,4 | 0,0 | 0 |
| Köder Tag 5 (g/kg) | 15,3 | 0,0 | 0 |
| Köder Tag 6 (g/kg) | 9,5 | 0,0 | 0 |
| Köder Tag 7 (g/kg) | 6,9 | 0,0 | 0 |
| Köder Tag 8 (g/kg) | 6,0 | 0,0 | 0 |
| Köder Tag 9 (g/kg) | 5,9 | 0,0 | 0 |
| Köder Tag 10 (g/kg) | 0,8 | 0,0 | 0 |
| Coumatetralyl Leber (g/g) | 11.43 (n = 11) | 3,58 (n = 12) | 0,31 |

## Patentansprüche

1. Verwendung eines Mittels zur Bekämpfung von Wanderratten, die eine Gensequenzänderung in der Vitamin-K-Epoxid-Reduktase Complex 1 Subunit 1 (VKORC1) aufweisen und vom Stamm L120Q Berkshire, L120Q Hampshire, Y139C oder Y139F sind und bei denen gegen mindestens ein Antikoagulant der zweiten Generation eine praktische Resistenz vorliegt, **dadurch gekennzeichnet, dass**
- die Antikoagulantien der zweiten Generation ausgewählt sind aus der Gruppe von Bromadiolone und Difenacoum,
- sich die praktische Resistenz durch einen Resistenzfaktor von mindestens 7 gegenüber Bromadiolone bzw. von mindestens 2 gegenüber Difenacoum auszeichnet,
- das Mittel mindestens ein Hydroxycumarin ausgewählt aus der Gruppe von Warfarin, Coumachlore, Coumatetralyl, Bromadiolone, Difenacoum und Flocoumafen und mindestens ein Vitamin D-Analog ausgewählt aus der Gruppe von Ergocalciferol und Cholecalciferol in einer Konzentration zwischen 50 und 100 mg/kg, enthält.

2. Verwendung eines Mittels gemäß Anspruch 1, **dadurch gekennzeichnet, dass** eine praktische Resistenz mindestens gegenüber Bromadiolone vorliegt und sich die praktische Resistenz
- beim Stamm Y139C durch einen Resistenzfaktor von mindestens 15;
- beim Stamm Y139F durch einen Resistenzfaktor von mindestens 7; und
- beim Stamm L120Q Hampshire durch einen Resistenzfaktor von mindestens 10; gegenüber Bromadiolone auszeichnet.

3. Verwendung eines Mittels gemäß einem der vorherigen Ansprüche, **dadurch gekennzeichnet, dass** das mindestens eine Hydroxycumarin Coumatetralyl ist.

4. Verwendung eines Mittels gemäß einem der vorherigen Ansprüche, **dadurch gekennzeichnet, dass** das Mittel zur Minderung der Rückstandswerte des mindestens einen eingesetzten Hydroxycumarins in der Wanderratte eingesetzt wird.

5. Verfahren zur Bekämpfung von Wanderratten, die eine Gensequenzänderung in der Vitamin-K-Epoxid-Reduktase Complex 1 Subunit 1 (VKORC1) aufweisen und vom Stamm L120Q Berkshire, L120Q Hampshire, Y139C oder Y139F sind und für die zumindest gegen ein Antikoagulant der zweiten Generation eine praktische Resistenz vorliegt,
**dadurch gekennzeichnet, dass**
- die Antikoagulantien der zweiten Generation ausgewählt sind aus der Gruppe von Bromadiolone und Difenacoum,
- sich die praktische Resistenz durch einen Resistenzfaktor von mindestens 7 gegenüber Bromadiolone bzw. von mindestens 2 gegenüber Difenacoum auszeichnet,
- ein Mittel welches mindestens ein Hydroxycumarin ausgewählt aus der Gruppe von Warfarin, Coumachlore, Coumatetralyl, Bromadiolone, Difenacoum und Flocoumafen und mindestens ein Vitamin D-Analog ausgewählt aus der Gruppe von Ergocalciferol und Cholecalciferol in einer Konzentration zwischen 50 und 100 mg/kg enthält, eingesetzt wird.

## Claims

1. Use of an agent for controlling brown rats which have a gene sequence change in the vitamin K epoxide reductase complex 1 subunit 1 (VKORC1) and are of the strain L120Q Berkshire, L120Q Hampshire, Y139C or Y139F and in which there is a practical resistance to at least one second-generation anticoagulant,
**characterized in that**
- the second-generation anticoagulants are selected from the group of bromadiolone and difenacoum,
- the practical resistance is distinguished by a resistance factor of at least 7 with respect to bromadiolone and of at least 2 with respect to difenacoum,
- the agent contains at least one hydroxycoumarin selected from the group of warfarin, coumachlor, coumatetralyl, bromadiolone, difenacoum and flocoumafen and at least one vitamin D analogue selected from the group of ergocalciferol and cholecalciferol in a concentration between 50 and 100 mg/kg.

2. Use of an agent according to Claim 1, **characterized in that** there is a practical resistance at least to bromadiolone and the practical resistance is distinguished
- by a resistance factor of at least 15, in the case of strain Y139C,
- by a resistance factor of at least 7, in the case of strain Y139F, and
- by a resistance factor of at least 10, in the case of strain L120Q Hampshire,
with respect to bromadiolone.

3. Use of an agent according to either of the preceding claims, **characterized in that** the at least one hydroxycoumarin is coumatetralyl.

4. Use of an agent according to any of the preceding claims, **characterized in that** the agent is used for decreasing in the brown rat the residue values of the at least one hydroxycoumarin used.

5. Method for controlling brown rats which have a gene sequence change in the vitamin K epoxide reductase complex 1 subunit 1 (VKORC1) and are of the strain L120Q Berkshire, L120Q Hampshire, Y139C or Y139F and for which there is a practical resistance at least to a second-generation anticoagulant, **characterized in that**
- the second-generation anticoagulants are selected from the group of bromadiolone and difenacoum,
- the practical resistance is distinguished by a resistance factor of at least 7 with respect to bromadiolone and of at least 2 with respect to difenacoum,
- an agent containing at least one hydroxycoumarin selected from the group of warfarin, coumachlor, coumatetralyl, bromadiolone, difenacoum and flocoumafen and at least one vitamin D analogue selected from the group of ergocalciferol and cholecalciferol in a concentration between 50 and 100 mg/kg is used.

## Revendications

1. Utilisation d'un moyen pour lutter contre les rats bruns, qui présentent une modification de séquence génique dans la sous-unité 1 du complexe 1 vitamine K époxyde réductase (VKORC1) et qui proviennent des souches L120Q Berkshire, L120Q Hampshire, Y139C ou Y139F et chez lesquels il existe une résistance pratique contre au moins un anticoagulant de la deuxième génération, **caractérisée en ce que**
- les anticoagulants de la deuxième génération sont choisis dans le groupe constitué par la bromadiolone et le Difenacoum,
- la résistance pratique se **caractérise par** un facteur de résistance d'au moins 7 par rapport à la bromadiolone ou d'au moins 2 par rapport au Difenacoum,
- l'agent contient au moins une hydroxycoumarine choisie dans le groupe constitué par la warfarine, le coumachlore, le coumatétralyle, la bromadiolone, le Difenacoum et le flocoumafen et au moins un analogue de vitamine D choisi dans le groupe constitué par l'ergocalciférol et le cholécalciférol en une concentration entre 50 et 100 mg/kg.

2. Utilisation d'un agent selon la revendication 1, **caractérisée en ce qu'**il existe une résistance pratique au moins contre la bromadiolone et la résistance pratique se caractérise
- dans le cas de la souche Y139C par un facteur de résistance d'au moins 15 ;
- dans le cas de la souche Y139F par un facteur de résistance d'au moins 7 ; et
- dans le cas de la souche L120Q Hampshire par un facteur de résistance d'au moins 10 ;
par rapport à la bromadiolone.

3. Utilisation d'un agent selon l'une quelconque des revendications précédentes, **caractérisée en ce que** ladite au moins une hydroxycoumarine est le coumatétralyle.

4. Utilisation d'un agent selon l'une quelconque des revendications précédentes, **caractérisée en ce que** l'agent est utilisé pour diminuer les valeurs de résidu de ladite au moins une hydroxycoumarine utilisée chez les rats bruns.

5. Procédé pour lutter contre les rats bruns, qui présentent une modification de séquence génique dans la sous-unité 1 du complexe 1 vitamine K époxyde réductase (VKORC1) et qui proviennent des souches L120Q Berkshire, L120Q Hampshire, Y139C ou Y139F et chez lesquels il existe une résistance pratique contre au moins un anticoagulant de la deuxième génération, **caractérisé en ce que**
- les anticoagulants de la deuxième génération sont choisis dans le groupe constitué par la bromadiolone et le Difenacoum,
- la résistance pratique se **caractérise par** un facteur de résistance d'au moins 7 par rapport à la bromadiolone ou d'au moins 2 par rapport au Difenacoum,
- un agent qui contient au moins une hydroxycoumarine choisie dans le groupe constitué par la warfarine, le coumachlore, le coumatétralyle, la bromadiolone, le Difenacoum et le flocoumafen et au moins un analogue de vitamine D choisi dans le groupe constitué par l'ergocalciférol et le cholécalciférol en une concentration entre 50 et 100 mg/kg est utilisé.
